# EUROPEAN PATENT SPECIFICATION

(11) **EP 2 928 616 B1**
(45) Date of publication and mention of the grant of the patent: **26.07.2017**
(21) Application number: 13706234.5
(22) Date of filing: 21.02.2013
(51) Int. Cl.: B05D 3/14, C03C 17/00, C08J 7/00, G02B 1/10

(54) **METHOD FOR COATING AN OPTICAL ARTICLE WITH A TOPCOAT USING VACUUM AIR PLASMA TREATMENT**
VERFAHREN ZUR BESCHICHTUNG EINES OPTISCHEN ARTIKELS MIT EINER DECKBESCHICHTUNG MITTELS EINER SAUGLUFTPLASMABEHANDLUNG
PROCÉDÉ PERMETTANT DE REVÊTIR UN ARTICLE OPTIQUE AVEC UNE COUCHE DE FINITION À L'AIDE D'UN TRAITEMENT PAR PLASMA D'AIR SOUS VIDE

(30) Priority: 04.12.2012 US 201261733061 P
(43) Date of publication of application: 14.10.2015
(73) Proprietor: Essilor International (Compagnie Générale d'Optique), 94220 Charenton-Le-Pont (FR)
(72) Inventor: FOURNAND, Gerald, Flower Mound, Texas 75028 (US)
(74) Representative: Cabinet Plasseraud
(86) International application number: PCT/EP2013/053401
(87) International publication number: WO 2014/086501

(56) References cited:
- EP-A2- 1 726 974
- DE-A1- 4 322 512
- DE-A1- 10 100 383
- US-A1- 2005 008 784
- US-A1- 2009 232 978

## Description

### FIELD OF THE INVENTION

The present invention is drawn to a method for providing an optical article, such as an ophthalmic lens, with a topcoat, comprising: (a) activating the surface of an outermost organic coating of said article with vacuum air plasma, (b) optionally depositing a specific bond coat composition onto said activated surface, so as to obtain a bond coat, and (c) coating the activated surface of the outermost organic coating, or the bond coat if present, with said topcoat composition so as to form a topcoat, preferably an anti-fouling or anti-fog topcoat.

### BACKGROUND OF THE INVENTION

It is common practice in the art to coat at least one main surface of a lens substrate, such as an ophthalmic lens, with several coatings for imparting to the finished lens additional or improved optical or mechanical properties. These coatings are designated in general as functional coatings. Thus, it is usual practice to coat at least one main surface of a lens substrate, typically made of an organic glass material, with successively, starting from the surface of the lens substrate, an impact-resistant coating (impact resistant primer), an abrasion- and/or scratch-resistant coating (hard coat) and an anti-reflection coating.

The last generation ophthalmic lenses most often comprise an external layer of anti-fouling or anti-fog material deposited on the outer coating, so as to reduce its tendency to staining. The anti-fouling top coat is generally a hydrophobic and/or oleophobic coating, which reduces the surface energy so as to avoid the adhesion of fatty deposits, such as fingerprints, sebum, sweat, cosmetics, which are thus easier to remove. The anti-fog coating is intended to prevent any fog formation in very damp environments, that is to say the condensation of very little water droplets on a support.

Typical anti-fouling and anti-fog topcoats may only be deposited onto a surface bearing a sufficient amount of Si-O groups, such as an inorganic or sol-gel outer coating, usually an anti-reflection coating. Otherwise, its adhesion has proven to be low or even inexistent. In the case where these topcoats should be applied onto an organic coating such as the hard-coat, it has been attempted to solve this problem by changing the composition of the hard-coat to try to incorporate therein some Si-O groups. Another solution has been to design specific topcoats, but this makes the process more complex as a specific topcoat is required for each type of surface.

The present invention aims at overcoming the deficiencies of these prior solutions by providing a method which can be used for applying known topcoats onto any type of organic or hybrid outer coating. This method comprises a step of activating by vacuum air plasma either the substrate or the outermost organic coating of the optical article to be covered with a topcoat. US2009/023978 discloses a method for the formation of an organic antireflection layer on an ophthalmic lens by subjecting it to a plasma treatment by air plasma and subsequently applying an antireflection treatment liquid by a spinner method. US 2004/253369 discloses a process for applying an anti-soiling topcoat onto the outermost organic or inorganic coating of an optical article, comprising a step of treating the surface of this coating with activated chemical species, preferably oxygen free radicals, at atmospheric pressure, before applying the topcoat. The activation treatment is preferably corona treatment or oxygen plasma treatment, which may be conducted while blowing air so as to uniformize the action of the activated chemical species. Similarly, WO 2007/051841 discloses a process for coating an optical article with an anti-fouling topcoat, comprising treating the outermost organic or inorganic layer of the optical article with energetic species before vacuum evaporating a liquid coating material for an anti-fouling topcoat. The treatment is preferably performed by means of a plasma, such as oxygen plasma, which may be conducted under vacuum or at atmospheric pressure.

It has now been demonstrated that performing this plasma treatment with a flow of air and under vacuum improves the adhesion of the topcoat.

### SUMMARY OF THE INVENTION

The present invention is therefore drawn to a method for providing an optical article with a topcoat, comprising:
(a) activating the surface of an outermost organic coating of said article with vacuum air plasma,
(b) optionally depositing onto said activated surface a bond coat composition comprising at least one adhesion promoter comprising: (i) a -SiXYZ head group, wherein X, Y and Z are independently chosen from an halogen atom or an -OR group wherein each R is independently a linear alkyl having from 1 to 6 carbon atoms or a branched alkyl having from 3 to 6 carbon atoms, (ii) a reactive end group which is able to react, optionally after a physical or chemical treatment, with at least one function carried by at least one compound included in a topcoat composition, and (iii) a spacer that links the head and end groups,
   so as to obtain a bond coat,
(c) coating the activated surface of the outermost organic coating, or the bond coat if present, with said topcoat composition, so as to form a topcoat.

It has been demonstrated that the activation of the outermost coating with vacuum air plasma allows for good adhesion of the topcoat thereon, optionally after applying an intermediate bond coat. Such adhesion may be characterized by measuring the contact angle, which should be of at least 95° and preferably at least 100°. The contact angle may be measured using a goniometer from Kruss after applying 3 to 5 drops of water with a unit volume of 4µl onto the lenses previously washed with soap and water and then air dried. Moreover, these properties are kept after accelerated life tests conducted by immersing the lens provided with the topcoat in a bath of 0,1N sodium hydroxide for 30 minutes, then rinsing them with water and IPA and then drying them.

It should be stressed that the above method may comprise further preliminary, intermediate or subsequent steps, provided that they do not prevent the deposition of a topcoat which sufficiently adheres to the outermost coating of the lens, as defined above.

Interestingly, the method of this invention may be carried out by an optician without having to remove spectacle lenses and/or send them to the manufacturer. It is particularly intended for depositing an anti-fouling or anti-fog topcoat, or replacing an existing anti-fouling topcoat having reduced performances, on solar lenses which are usually not coated by an inorganic anti-reflection coating.

### DETAILED DESCRIPTION

In this description, the expression "comprised between" used in connection with a range of values should be understood as including the specific upper and lower values of this range. As used herein, a "(co)polymer" is intended to mean a copolymer or a polymer. Moreover, (meth)acrylic and (meth)acrylate are respectively intended to mean acrylic or methacrylic and acrylate or methacrylate.

As mentioned above, the method of the present invention aims at providing an optical article with a topcoat. This optical article may be a lens, preferably an ophthalmic lens which is part of glasses, preferably sunglasses, or a mask or goggle. This lens may be a corrective lens or a non-corrective lens. The method according to the invention is generally carried out on the convex face of the lens, but it can also be carried out on its concave face or on both main faces of a lens.

This method comprises a first step of a activating the surface of an outermost organic coating of said article with vacuum air plasma, which may for instance be applied under a pressure of 10 to 140 Pa, for instance between 10 and 50 Pa, more preferably between 20 and 40 Pa, for 20 seconds to 10 minutes and preferably for about 60 seconds. The plasma generator power depends on the volume of the vacuum chamber. It may typically be comprised between 5 and 20 W/L. The air flow may consist in about 78 vol.% of nitrogen, about 21 vol.% of oxygen and about 1 vol.% of one or more other gas(es). It can optionally be mixed with a flow of argon, nitrogen or oxygen.

Plasma can be generated by submitting a gas (here, air) to a high voltage or a high temperature arc (discharge). The source of the electric energy, which will ionize atoms and molecules, can be a DC or AC current, radiofrequency or microwaves. Ionization may be full or partial. The sources are connected to electrodes where the samples are set between.

The outermost coating may be made of an organic or organic/inorganic hybrid material. The organic material may be cured by thermal or UV treatment. Alternatively, it may comprise, or be made of, a thermoplastic material such as a thermoplastic film, which may be tinted or not. Such a thermoplastic material may be chosen from polyesters such as poly(ethylene terephthalate), polycarbonate, polyurethane, cycloolefin polymers or copolymers, cellulose triacetate and their mixtures. The hybrid material may or not contain nanoparticles and may also be cured by thermal or UV treatment. Thus, inorganic anti-reflection coatings, mirror coatings and anti-static coatings are excluded from this definition. This outermost coating may thus be chosen from an organic substrate, an impact-resistant coating, an abrasion-resistant coating and an organic / inorganic hybrid anti-reflection coating. These various outermost coatings will be described hereafter in greater details.

After treating the outermost coating, a bond coat may optionally be applied thereon. To this end, a bond coat composition is deposited onto the outermost coating. It comprises at least one adhesion promoter comprising: (i) a -SiXYZ head group, wherein X, Y and Z are independently chosen from an halogen atom or an -OR group wherein each R is independently a linear alkyl having from 1 to 6 carbon atoms or a branched alkyl having from 3 to 6 carbon atoms, (ii) a reactive end group which is able to react, optionally after a physical treatment, such as a corona or plasma treatment, or after a chemical treatment, with at least one function carried by at least one compound included in a topcoat composition, and (iii) a spacer that links the head and end groups.

The bond coat thus obtained may then optionally be further rinsed with water and/or dried.

The method of this invention preferably further includes a step of activating the surface of the bond coat with vacuum air plasma before step (c).

After plasma treatment of the outermost coating and optionally deposition of the bond coat, a topcoat composition is then applied to the optical article, for instance by vacuum evaporation, spray coating, wipe coating or dip coating.

The topcoat may be selected from the group consisting of an anti-fouling coating, an anti-fog coating, an anti-reflection coating, or a mirror coating, preferably an anti-fouling coating or an anti-fog coating. Appropriate compositions which are suitable for forming the aforesaid topcoats will be described hereafter.

According to an embodiment of this invention, both the bond coat composition and the topcoat composition are applied by vacuum evaporation. According to another embodiment, the bond coat composition is applied by spray coating and the topcoat composition is applied by either spray coating or by wipe coating. By "wipe coating", it is meant that the topcoat composition is impregnated on a wipe or paper which is then passed onto the surface of the outermost coating or of the bond coat, if present.

In the case where the topcoat is an anti-fouling coating, the method of this invention preferably includes step (b), i.e. intercalating a bond coat between the outermost coating and the topcoat.

In the case where the topcoat is an anti-fog coating, the method of this invention preferably does not include step (b), i.e. the topcoat is directly applied onto the outermost coating.

As a result of depositing the topcoat onto the outermost layer of the optical article according to the process of this invention, a finished optical article is obtained, having two main faces, at least one of which comprising a coating layer coated with a top coat and adhering to the surface of said coating layer. In a preferred embodiment, both main faces of the optical article are coated with the topcoat.

The compositions used for forming the outermost coating, the bond coat and the topcoat will now be described in details.

### Outermost organic coating

**The organic substrate** may comprise thermoset or thermoplastic materials. Amongst the materials suitable for the substrate are to be mentioned polycarbonate, polyamide, polyimide, polysulfone, copolymers of poly(ethylene terephtalate) and polycarbonate, polyolefines, notably polynorbornene, homopolymers and copolymers of diethyleneglycol bis(allylcarbonate), (meth)acrylic polymers and copolymers, notably polymers and copolymers of (meth)acrylic derivatives with bisphenol-A, thio(meth)acrylic polymers and copolymers, polyurethane and polythiourethane homopolymers and copolymers, epoxy polymers and copolymers and episulfide polymers and copolymers.

The substrate may be tinted or not.

**The impact-resistant coating** can be any coating typically used for improving impact resistance of a finished optical article. Also, this coating generally enhances adhesion of the scratch-resistant coating on the substrate of the finished optical article. Typical impact-resistance coatings are (meth)acrylic based coatings and polyurethane-based coatings.

(Meth)acrylic-based impact-resistant coatings are, among others, disclosed in U.S. Pat. Nos. 5,015,523 and 6,503,631. Among the preferred (meth)acrylic based impact-resistant coating compositions there can be cited polyethylene glycol(meth)acrylate based compositions such as, for example, tetraethylene glycoldiacrylate, polyethylene glycol (200) diacrylate, polyethylene glycol (400) diacrylate, polyethylene glycol (600) di(meth)acrylate, as well as urethane (meth)acrylates and mixtures thereof. Preferably, the impact-resistant coating has a glass transition temperature (Tg) of less than 30°C. Among the preferred impact-resistant coating compositions, there may be cited the acrylic latex commercialized under the name Acrylic latex A-639 by Zeneca and polyurethane latexes commercialized under the names W-240 and W-234 by Baxenden. In an embodiment, the impact-resistant coating may also include an effective amount of a coupling agent in order to promote adhesion of this coating to the optical substrate and/or to the scratch-resistant coating.

Polyurethane-based impact-resistant coatings may be prepared from an aqueous colloidal polyurethane dispersion, which has preferably a pH in the range of 7 to 9 and a solid content ranging from 5% to 40%. Its average particle size may be in the range from 10 to 100 nm. The dispersion colloids may contain polyurethane or polyurethane-polyurea, i.e. a polymer formed by polyaddition reactions between polyisocyanates and polyols, leading to polyurethane segments, and optionally also between polyisocyanates and polyamines, leading to polyurea segments. Preferably, the polyisocyanate is reacted both with a polyol, such as polyesters diols, polyether diols and polycarbonate polyols, e.g. hexanediol, and with an anionic diol, such as dimethylolpropionic acid. Preferred isocyanates include isophorone diisocyanate, dicyclohexylmethane diisocyanate, hexamethylene diisocyanate and tetramethylxylene diisocyanate or 1-1' methylenebis(4-cyanatocyclohexane). A preferred impact-resistant composition is Witcobond W-234 supplied by CHEMTURA. Another impact-resistant composition may be made of W240 supplied by CHEMTURA.

The impact-resistant coating composition can be applied onto the lens substrate using any classical method such as spin, dip, or flow coating. Spin coating is most preferred. A method for applying the impact-resistant composition onto the substrate is given for instance in Example 1 of US-5,316,791. The impact-resistant coating composition can be simply air-dried at ambient temperature or optionally pre-cured before molding of the optical substrate. Depending upon the nature of the impact-resistant coating composition, thermal curing, UV-curing or a combination of both can be used. Thickness of the impact-resistant coating, after curing, typically ranges from 0.05 to 30 µm, preferably 0.5 to 20 µm and more particularly from 0.6 to 15 µm, and even better 0.6 to 5 µm.

**The abrasion- and/or scratch-resistant coating composition** can be a UV and/or a thermal curable composition.

According to an embodiment, the abrasion- and/or scratch-resistant coating (hereafter designated as "abrasion-resistant coating") may be a (meth)acrylate based coating. The main component of the (meth)acrylate based coating compositions may be chosen from monofunctional (meth)acrylates and multifunctional (meth)acrylates such as difunctional (meth)acrylates; trifunctional (meth)acrylates; tetrafunctional (meth)acrylates, pentafunctional(meth)acrylates, hexafunctional (meth)acrylates.

Examples of monomers which may be used as main components of (meth)acrylate based coating compositions are:
- Monofunctional (meth)acrylates: allyl methacrylate, 2-ethoxyethyl acrylate, 2-ethoxyethyl methacrylate, caprolactone acrylate, isobornyl methacrylate, lauryl methacrylate, polypropylene glycol monomethacrylate,
- Difunctional (meth)acrylates: 1,4-butanediol diacrylate, 1,6-hexanediol diacrylate, 1,6-hexanediol dimethacrylate, polyethylene glycol diacrylate, tetraethylene glycol diacrylate, polyethylene glycol dimethacrylate, polyethylene glycol diacrylate, ethoxylated bisphenol A diacrylate, tetraethylene glycol diacrylate, tripropylene glycol diacrylate, neopentyl glycol diacrylate, 1,4-butanediol dimethacrylate, tetraethylene glycol dimethacrylate, diethylene glycol diacrylate,
- Trifunctional (meth)acrylates: trimethylolpropane trimethacrylate, trimethylolpropane triacrylate, pentaerythritol triacrylate, ethoxylated trimethylolpropane triacrylate, trimethylolpropane trimethacrylate,
- Tetra- to hexa(meth)acrylates: dipentaerythritol pentaacrylate, pentaerythritol tetraacrylate, ethoxylated pentaerythritol tetraacrylate, pentaacrylate esters.

Other preferred abrasion-resistant coatings are those obtained by curing a solution prepared by a sol-gel process from at least one epoxysilane. Examples of epoxysilanes which may be used are those of formula (I):

(R¹O)₃₋ₙSi(R³)ₙ-W (I)

wherein:
R¹ is an alkyl group with 1 to 6 carbon atoms, preferably a methyl or ethyl group, an acetyl group, or a hydrogen atom,
R³ is a non-hydrolyzable group, such as an alkyl group having from 1 to 6 carbon atoms, preferably a methyl group,
n is 0 or 1, preferably 0,
W is an organic group containing at least one epoxy group, such as a -(CH₂)ₘ-Y group, wherein m ranges from 1 to 6 and is preferably 3, and Y is: 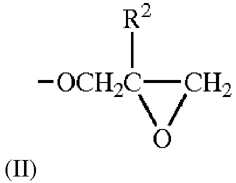
wherein R² is a methyl group or a hydrogen atom, preferably a hydrogen atom.

The following are examples of such epoxysilanes: γ-glycidoxypropyl trimethoxysilane, γ-glycidoxypropyltriethoxysilane and γ-glycidoxypropyl methyldiethoxysilane. Preferably, γ-glycidoxypropyl trimethoxysilane (GLYMO) and/or γ-glycidoxypropyl methyldiethoxysilane (Methyl GLYMO) are used in this invention.

The epoxysilane may be combined with a second epoxysilane and/or at least one alkoxysilane which does not contain any reactive functional group but optionally contains at least one non-hydrolyzable organic group, the purpose of which is generally to reduce the rigidity of the final coating obtained and to increase the shock resistance of the corresponding coated lens, while maintaining good abrasion resistance. This constituent may have formula (III): 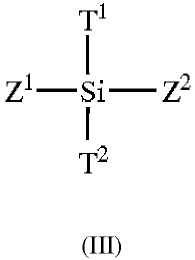 wherein each of the two groups T¹ and T² bonded to the silicon may be hydrolyzed to a hydroxy group and are independently selected from alkoxy groups with 1 to 10 carbon atoms, and Z¹ and Z² are selected independently of each other from alkoxy groups with 1 to 10 carbon atoms, alkyl groups with 6 to 10 carbon atoms and aryl groups with 6 to 10 carbon atoms, such as a phenyl group. Examples of alkoxysilanes of formula (III) are: dimethyldimethoxysilane, dimethyldiethoxysilane (DMDES), methylphenyldimethoxysilane and tetraethylorthosilicate (TEOS).

The epoxysilane and the above alkoxysilane, if present, are usually hydrolyzed so as to produce the abrasion-resistant coating, using known sol-gel processes. The techniques described in U.S. Pat. No. 4,211,823 can be employed. It is possible, for example, to mix the alkoxysilane (if present) and epoxysilane and then hydrolyze the mixture. It is preferable to use a stoichiometric amount of water for the hydrolysis, i.e. a molar quantity of water which corresponds to the number of moles of the alkoxy groups which can produce silanols. Hydrolysis catalysts such as hydrochloric acid, sulphuric acid, phosphoric acid, nitric acid and acetic acid may be employed.

The epoxysilane may also be combined with a colloidal inorganic binder. The colloidal inorganic binder may be added before or after hydrolysis, and may be chosen from metal oxides or preferably colloidal silica, i.e. fine particles of silica with a diameter of preferably less than 50 nm, for instance between 5 and 40 nm, in dispersion in a solvent, preferably an alcohol type solvent or alternatively water. An example of such colloidal silica is Nissan Sun Colloid Mast^{®} which contains 30% of solid SiO₂ in suspension in methanol, or Eka Chemicals' Nyacol^{®} 2034 DI.

Hydrolyzates may then condense spontaneously, optionally in the presence of the catalyst which may be chosen from the aforesaid acids or from metal halides, chelated compounds of acetylacetone and acetoacetate, carboxyl compounds of various metals (magnesium, titanium, zirconium tin...) and perchlorates. Preferably, the catalyst is aluminium chelate, i.e. a compound formed by reacting aluminium alcoholate or acylate with nitrogen- and sulphur-free sequestrating agents which contain oxygen as the coordinating atom. The catalyst is used in proportions which will harden the mixture over a period of a few hours at temperatures in the order of 100°C. It is generally used in a proportion of 0.1% to 5% by weight of the abrasion-resistant composition. When the catalyst is an aluminium chelate, the composition preferably further comprises an organic solvent whose boiling point T_{b} at atmospheric pressure is between 70°C and 140°C. Ethanol, isopropanol, ethyl acetate, methyl-ethylketone or tetrahydropyrane can be used for this purpose.

It is preferred that the abrasion-resistant coating is obtained by curing a composition prepared by a sol-gel process from a mixture which comprises: (a) at least one epoxysilane such as Methyl Glymo, (b) optionally, at least one alkoxysilane which does not contain any reactive functional group but optionally contains at least one non-hydrolyzable organic group, (c) a colloidal inorganic binder such as colloidal silica, and (d) aluminium acetylacetonate as a catalyst.

Moreover, the mixture used to prepare the abrasion-resistant coating can comprise other organic solvents, preferably alcohol type solvents such as methanol, which serve to adjust the viscosity of the composition. Furthermore, this mixture can also include various additives, such as surfactants or wetting agents to improve spreading of the composition over the surface to be coated, UV absorbers, dye agents and/or pigments. Specific examples of mixtures used to prepare the abrasion-resistant coating may be found in US 2005/0123771.

The abrasion-resistant coating may be applied to the underlying coating by any means known to the skilled artisan, for instance dip-coating, bar coating, spray coating, or spin coating. Spin coating is most preferred. The abrasion-resistant coating may be thermally hardened at a temperature ranging from 60°C to 200°C, for instance between 80°C and 150°C, for a period between 30 min and 3 hours. Its thickness generally ranges from 1 to 10 µm, for instance from 3 to 5 µm.

**Hybrid anti-reflection coatings** may be chosen from multi-layer anti-reflection stacks which comprise successively and in the order starting from the substrate:
(a) a high index (HI) layer, having a refractive index n_{D}²⁵ of 1.50 to 2.00 and resulting from the hardening of a first hardenable composition and comprising
   (i) an organic-inorganic hybrid matrix resulting from the hydrolysis and condensation of at least one precursor compound containing an epoxy or (meth)acryloxy group and at least two functions hydrolysable to silanol groups, and
   (ii) at least one colloidal metal oxide or at least one colloidal chalcogenide or mixtures of these compounds in the form of particles from 1 to 100 nm in diameter, and preferably from 2 to 50 nm, dispersed within the organic-inorganic hybrid matrix, and directly on this high index (HI) layer,
(b) a low index (LI) layer, having a refractive index n_{D}²⁵ ranging from 1.38 to 1.44 obtained by deposition and hardening of a second hardenable composition and comprising the product of hydrolysis and condensation of:
   (i) at least one precursor compound (I) comprising 4 hydrolysable functions per molecule of formula Si(W)₄, in which the groups W, identical or different, are hydrolysable groups and provided that the groups W do not all represent at the same time a hydrogen atom,
   (ii) at least one silane precursor (II) bearing at least one fluorinated group and containing at least two hydrolysable groups per molecule,
   said second composition comprising at least 10% by mass of fluorine in its theoretical dry extract (TDE), and the molar ratio I/I+II of the precursor compound (I) to the sum of the precursor compound (I) and the precursor silane (II) of the second composition being greater than 80%.

Such anti-reflection coatings are for example described in US 2010/033824.

### Bond coat

The bond coat that may be interposed between the outermost coating and the topcoat comprises at least one adhesion promoter. As mentioned above, this adhesion promoter comprises, and preferably consists in, (i) a -SiXYZ head group, wherein X, Y and Z are independently chosen from an halogen atom or an -OR group wherein each R is independently a linear alkyl having from 1 to 6 carbon atoms or a branched alkyl having from 3 to 6 carbon atoms, (ii) a reactive end group which is able to react, optionally after a physical, chemical or physico-chemical treatment, with at least one function carried by at least one compound included in a topcoat composition, and (iii) a spacer that links the head and end groups.

The reactive end group is preferably any of the following groups: amino, hydroxyl, thiohydroxy, acetamido, halogeno, halogenosilane, alcoxysilane, acetoxysilane, epoxy, thioepoxy, aldehyde, alkyne, carboxyl or a group which may be converted into one of those by chemical reaction, for instance an ether, thioether, alkene, ketone or carboxylic acid ester group.

The adhesion promoter is preferably such that at least one, and preferably all, the following conditions are satisfied:
- the -SiXYZ head group is chosen from mono-, di- and tri-alcoxy silane groups, preferably tri-alcoxysilane groups, and the alcoxy group is chosen from methoxy and ethoxy groups,
- the spacer is a linear alkylene chain having from 1 to 10 carbon atoms or a branched alkylene chain having from 3 to 10 carbon atoms, wherein up to 3 carbon atoms may be substituted by an oxygen atom or a sulphur atom, preferably a linear alkylene chain having from 2 to 4 carbon atoms, and
- the reactive end group is chosen from the group consisting of amino, hydroxyl, thiohydroxy, acetamido, halogeno, halogenosilane, alcoxysilane, acetoxysilane, epoxy, thioepoxy, aldehyde, alkyne, carboxyl, ether, thioether, alkene, ketone and carboxylic acid ester groups, preferably amino or epoxy groups.

The adhesion promoter may have a molecular weight between 150 and 1000 g/mol and preferably between 165 and 450 g/mol.

Examples of adhesion promoters are 3-amino-propyltrimethoxysilane (APTMS), 3-aminopropyltriethoxysilane (APTES), 3-aminopropyl-tris(methoxyethoxyethoxy) silane, acetamido propyltrimethoxysilane, γ-glycidoxypropyl trimethoxysilane (GLYMO), γ-glycidoxypropyltriethoxysilane, and mixtures thereof.

The bond coat usually consists in the adhesion promoter, and does not contain any other compound besides the impurities optionally present in the adhesion promoter as a result of its synthesis.

The bond coat generally has a thickness ranging from 1 nm to 100 nm.

The bond coat composition may be applied onto the outermost organic coating by vacuum evaporation or by spray deposition. Various evaporation devices can be used in accordance with the process of the invention, such as devices based on ion or electron beam heating methods, devices based on high-frequency heating method, devices based on optical heating method (for example such device comprising a tungsten lamp), a Joule effect device or resistance heating device, and more generally any heating device which provides sufficient heat to evaporate the liquid coating material. Those devices are well known in the art.

### Topcoats

**The anti-fouling top coats** preferably used in this invention are those which reduce surface energy of the optical article to less than 14 mJ/m². The invention has a particular interest when using anti-fouling topcoats having a surface energy of less than 13 mJ/m² and even better less than 12 mJ/m². These surface energy values are calculated according to Owens Wendt method described in the following document: Owens, D. K.; Wendt, R. G. "Estimation of the surface force energy of polymers", J. Appl. Polym. Sci. 1969, 51, 1741-1747.

The anti-fouling top coat according to the invention is preferably of organic nature. By organic nature, it is meant a layer which is comprised of at least 40% by weight, preferably at least 50% by weight of organic materials, relative to the total weight of the coating layer. A preferred anti-fouling top coat is made from a liquid coating material comprising at least one fluorinated compound, bearing in particular perfluorocarbon or perfluoropolyether group(s). By way of example, silazane, polysilazane or silicone compounds are to be mentioned, comprising one or more fluorine-containing groups such as those mentioned here above. Such compounds have been widely disclosed in the previous art, for example in Patents US 4 410 563, EP 0 203 730, EP 0 749 021, EP 0 844 265 and EP 0 933 377.

Preferred fluorinated compounds are silanes and silazanes bearing at least one group selected from fluorinated hydrocarcarbons, perfluorocarbons, fluorinated polyethers such as F₃C-(OC₃F₆)₂₄-O-(CF₂)₂-(CH₂)₂-O-CH₂-Si(OCH₃)₃ and perfluoropolyethers, in particular perfluoropolyethers.

Among fluorosilanes there may be cited the compounds of formulae: 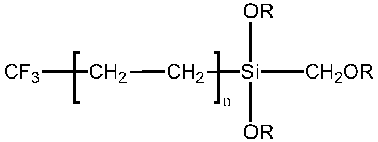 wherein n = 5, 7, 9 or 11 and R is an alkyl group, typically a C₁-C₁₀ alkyl group such as methyl, ethyl and propyl; CF₃CH₂CH₂ SiCl3; CF₃-CF₂-(CH₂CH₂)_{n'}-SiCl3 ; and 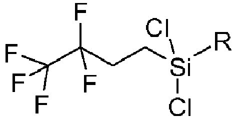 wherein n' = 7 or 9 and R is as defined above.

Compositions containing fluorinated compounds also useful for making hydrophobic and/or oleophobic top coats are disclosed in US 6,183,872. The silicon-containing organic fluoropolymer of US 6,183,872 is represented by the below general formula and has a number average molecular weight of from 5.10² to 1.10⁵. 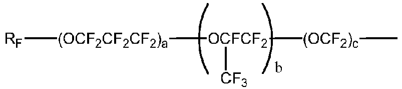 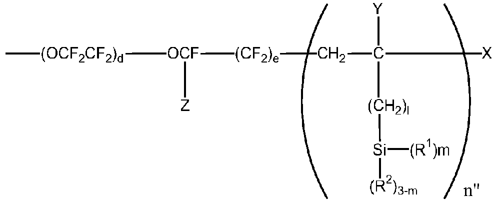 wherein RF represents a perfluoroalkyl group, Z represents a fluorine atom or a trifluoromethyl group, a, b, c, d and e each independently represent 0 or an integer equal to or higher than 1, provided that a + b + c + d + e is not less than 1 and the order of the repeating units parenthesized by subscripts a, b, c, d and e occurring in the above formula is not limited to that shown ; Y represents a hydrogen atom or an alkyl group containing 1 to 4 carbon atoms ; X represents a hydrogen, bromine or iodine atom ; R¹ represents a hydroxyl group or a hydrolyzable substituent group ; R² represents a hydrogen atom or a monovalent hydrocarbon group ; I represents 0, 1 or 2 ; m represents 1, 2 or 3 ; and n" represents an integer equal to or higher than 1, preferably equal to or higher than 2.

Other preferred compositions for forming the anti-fouling topcoat are those containing compounds comprising fluorinated polyether groups, in particular perfluoropolyether groups. A particular preferred class of compositions containing fluorinated polyether groups is disclosed in US 6,277,485. The anti-fouling top coats of US 6,277,485 are at least partially cured coatings comprising a fluorinated siloxane prepared by applying a coating composition (typically in the form of a solution) comprising at least one fluorinated silane of the following formula:

R_{F}-[-R¹⁻SiY₃₋ₓR²X]_{y}

wherein R_{F} is a monovalent or divalent fluorinated polyether group, R¹ is a divalent alkylene group, arylene group, or combinations thereof, optionally containing one or more heteroatoms or functional groups and optionally substituted with halide atoms, and preferably containing 2 to 16 carbon atoms; R² is a lower alkyl group (i.e., a C₁-C₄ alkyl group) ; Y is a halide atom, a lower alkoxy group (i.e., a C₁-C₄ alkoxy group, preferably, a methoxy or ethoxy group), or a lower acyloxy group (i.e., -OC(O)R³ wherein R³ is a C₁-C₄ alkyl group) ; x is 0 or 1 ; and y is 1 (R^{F} is monovalent) or 2 (R^{F} is divalent). Suitable compounds typically have a molecular weight (number average) of at least about 1000. Preferably, Y is a lower alkoxy group and R^{F} is a fluorinated polyether group.

Commercial compositions for making anti-fouling top coats are the compositions KY130 and KP 801 M commercialized by Shin-Etsu Chemical and the composition OPTOOL DSX (a fluorine-based resin comprising perfluoropropylene moieties) commercialized by Daikin Industries. OPTOOL DSX is the most preferred coating material for anti-fouling top coats.

**The anti-fog topcoat** usually consists in a hydrophilic coating, which provides a low static contact angle with water, preferably of less than 50°, more preferably of less than 25°. These coatings are generally made of highly hydrophilic species such as sulfonates or polyurethanes.

Commercially available products comprise several micrometer-thick hydrophilic layers.

The antifog coating may be a permanent antifog coating, that is a coating which hydrophilic properties result from hydrophilic compounds permanently bound to another coating or support. Such coatings are for example described in EP 1324078, US 6,251,523 and US 6,379,776.

Alternatively, the antifog coating may be a temporary antifog coating resulting from the application of a hydrophilic solution onto the surface of an antifog coating precursor.

For instance, EP 1275624 describes a lens coated with a hard, inorganic, hydrophilic layer based on metal oxides and silicon oxide. Its hydrophilic nature and the presence of nanosized concave portions on the surface thereof enable to impregnate a surfactant and to retain the same adsorbed over a long period of time, thus maintaining an antifog effect for several days. However, an antifog effect can also be observed in the absence of any surfactant.

The antifog coating precursor used for example in EP 1276624 is generally obtained from a composition comprising an organic compound comprising a hydrophilic group such as polyoxyethylene, a reactive group chosen from an alkoxysilane Si(OR)ₙ, a silanol SiOH or isocyanate groups, and optionally a fluorinated hydrophobic group. The composition is chosen so that the static contact angle with water of the antifog coating precursor varies from 50° to 90°. The organic compounds used in the antifog coating precursor preferably have a molecular weight ranging from 700 to 5000 or from 430 to 3700 g/mol. To be mentioned as examples of such compounds are the CH₃O(CH₂CH₂O)₂₂CONH(CH₂)₃Si(OCH₃)₃ or C₈F₁₇O(CH₂CH₂O)₂CONH(CH₂)₃₋Si(OCH₃)₃ compounds. The antifog coating precursor is generally 0.5 to 20 nm thick.

Another antifog coating precursor is described in WO 2011/080472. This antifog coating precursor is obtained through the grafting of at least one organosilane compound possessing both a polyoxyalkylene group comprising less than 80 carbon atoms, and at least one silicon atom carrying at least one hydrolyzable group. It has a thickness lower than or equal to 5 nm and a static contact angle with water of more than 10° and of less than 50°.

The solution which is preferably deposited to provide the surface of the antifog coating precursor with antifogging properties is the commercially available solution of Defog it™.

The antifogging properties, especially the durability of the antifogging effect associated with the antifog coating precursor described in WO 2011/080472, are very satisfactory.

**The anti-reflection coating** can be any layer or stack of layers which improves the anti- reflective properties of the finished optical article. The anti-reflection coating may be a mono- or multilayered anti-reflection coating, and preferably consists of a mono- or multilayered film of dielectric materials such as SiO, SiO₂, Si₃N₄, TiO₂, ZrO2, Al₂O₃, MgF₂, Ta₂O₅, or mixtures thereof.

The anti-reflection coating can be applied in particular by vacuum deposition according to one of the following techniques:
1) - by evaporation, optionally ion beam-assisted;
2) - by spraying using an ion beam,
3) - by cathode sputtering; or
4) - by plasma-assisted vapor-phase chemical deposition.

The anti-reflection coating can also be applied by applying liquid solutions, preferably by a spin coating process.

In the case where the anti-reflection coating includes a single layer, its optical thickness must be equal to λ/4, where λ is a wavelength of 450 to 650 nm. Preferably, the anti-reflection coating is a multilayer film comprising three or more dielectric material layers of alternatively high and low refractive indexes. A preferred anti-reflection coating may comprises a stack of four layers formed by vacuum deposition, for example a first SiO₂ layer having an optical thickness of about 100 to 160 nm, a second ZrO₂ layer having an optical thickness of about 120 to 190 nm, a third SiO₂ layer having an optical thickness of about 20 to 40 nm and a fourth ZrO₂ layer having an optical thickness of about 35 to 75 nm.

This invention will be better understood in light of the following examples which are given for illustration purposes only and do not intend to restrict in any way the scope of the appended claims.

### EXAMPLES

### Example 1: Deposition of a topcoat onto an organic substrate treated with air plasma

Two Orma^{®} lenses placed each in a lens holder were placed in a frame in a plasma chamber supplied by DEINER. The pump was turned on and the vacuum was pulled. When the vacuum reached 0.3 mbar, an air flow with a flow rate of 0.61 ml/min was introduced into the plasma. When the air flow had stabilized, the plasma was started and set for 80% of the total capacity for 2 minutes. After 2 minutes, the vacuum was released and the lens and frame were removed from the chamber. A 0.1% solution resulting from mixing 20% of fluorosilane in perfluorohexane (OPTOOL^{®} DSX from DAIKIN) with 80% of methoxynonafluorobutane (NovaSpray^{®} HFE 7100 from INVENTEC) was absorbed on a wipe (Kimwipe^{®}) that was then used to deposit a topcoat onto the plasma-treated lenses. After deposition, the lenses were left for 5 minutes and then washed with isopropyl alcohol.

The lenses were tested so as to assess their contact angle. For this purpose, the lenses were washed with a conventional soap composition and water and then air dried. The contact angle was then measured using a goniometer from Kruss after applying 3 to 5 drops of water with a volume of 4µl each. A mean contact angle of 100° was measured. These lenses were then subjected to ageing by dipping them for 30 minutes in a bath of sodium hydroxide (0.1 N). The lenses were then rinsed in deionized water and washed with isopropyl alcohol. After air drying, the contact angle was measured again as indicated above. The mean contact angle measured after this ageing step was 97.5°. This experiment demonstrates that the anti-fouling topcoat adheres properly and durably to the lenses treated according to this invention.

### Example 2 (comparative): Deposition of a topcoat onto an organic substrate treated with oxygen plasma

The procedure given in Example 1 was repeated, except that no air flow was introduced into the plasma chamber. Only oxygen plasma was used.

The value of the mean contact angle measured for these lenses was 87.5° before and after the ageing step, thus well below 95°. Therefore, the anti-fouling topcoat does not adhere properly to lenses that have not been treated with air plasma.

### Example 3: Deposition of a topcoat with intermediate bond coat

An Orma^{®} lens placed in a lens holder was placed in a frame in a plasma chamber supplied by DEINER. The pump was turned on and the vacuum was pulled. When the vacuum reached 0.3 mbar, an air flow with a flow rate of 0.61 ml/min was introduced into the plasma. When the air flow had stabilized, the plasma was started and set for 80% of the total capacity for 2 minutes. After 2 minutes, the vacuum was released and the lens and frame were removed from the chamber. The treated lens was dipped in a 1% solution of 3-aminopropyl-tris(methoxyethoxyethoxy)silane in water, and then in water only, at room temperature, so as to remove excess adhesion promoter. The lens was then dry wiped so as to remove excess water. A bond coat was thus deposited onto the lens, which was then wiped with a 0.1% solution resulting from mixing 20% of fluorosilane in perfluorohexane (OPTOOL^{®} DSX from DAIKIN) with 80% of methoxynonafluorobutane (NovaSpray^{®} HFE 7100 from INVENTEC) in order to deposit a topcoat onto the lenses. After deposition, the lens was left for 5 minutes and then washed with isopropyl alcohol.

Two further lenses were prepared as described above, except that a hard-coat was interposed between the substrate and the bond coat. One of the lenses carried a hard-coat made from a mixture of Glymo, DMDES, colloidal silica (30% in methanol), 2-ethoxyethanol and aluminium acetylacetonate, as described in Example 3 of EP 0 614 957, hereafter designated as "HC1". The other lens carried a hard-coat made from a commercial hard-coat composition supplied by LTI, which was spin coated and UV cured in a MagnaSpin from Satisloh, hereafter designated as "HC2". These hardcoats had a thickness between 3.5 and 5µm.

These three lenses were tested so as to assess the contact angle before and after aging, as described above The results of these experiments are summarized in Table 1 below.

**Table 1**

| Lens | Contact angle (0 min) | Contact angle (30 min) |
|---|---|---|
| Plasma-treated substrate + bond-coat + topcoat | 114° | 114° |
| Plasma-treated substrate + HC1 + bond-coat + topcoat | 116° | 116° |
| Plasma-treated substrate + HC2 + bond-coat + topcoat | 117° | 117° |

This experiment demonstrates that the anti-fouling topcoat adheres properly and durably to the outermost organic coatings of ophthalmic lenses.

### Example 4: Deposition of a topcoat with intermediate bond coat

The procedure of example 3 was repeated, except that the bond coat was obtained by dipping the lenses in a 1% solution of Glymo in methanol, followed by oven curing for 15 minutes at 50°C. The bond-coat was further plasma-treated with an air flow for 2 minutes, as described in Example 1, so as to activate the SiOH groups.

The results of these experiments are summarized in Table 2 below.

**Table 2**

| Lens | Contact angle (0 min) | Contact angle (30 min) |
|---|---|---|
| Plasma-treated substrate + bond-coat + topcoat | 113° | 108° |
| Plasma-treated substrate + HC1 + bond-coat + topcoat | 114° | 109° |
| Plasma-treated substrate + HC2 + bond-coat + topcoat | 120° | 114° |

This experiment demonstrates that the anti-fouling topcoat adheres properly and durably to the outermost organic coatings of ophthalmic lenses.

## Claims

1. A method for providing an optical article with a topcoat, comprising:
(a) activating the surface of an outermost organic coating of said article with vacuum air plasma,
(b) optionally depositing onto said activated surface a bond coat composition comprising at least one adhesion promoter comprising: (i) a -SiXYZ head group, wherein X, Y and Z are independently chosen from an halogen atom or an -OR group wherein each R is independently a linear alkyl having from 1 to 6 carbon atoms or a branched alkyl having from 3 to 6 carbon atoms, (ii) a reactive end group which is able to react, optionally after physical or chemical treatment, with at least one function carried by at least one compound included in a topcoat composition, and (iii) a spacer that links the head and end groups,
so as to obtain a bond coat,
(c) coating the activated surface of the outermost organic coating, or the bond coat if present, with a topcoat composition, so as to form a topcoat,
the optical article being an ophthalmic lens.

2. The method of Claim 1, wherein air plasma is applied under a pressure of 10 to 140 Pa, for instance between 10 and 50 Pa, more preferably between 20 and 40 Pa.

3. The method according to Claim 1 or 2, wherein the outermost organic coating is chosen from an organic substrate, an abrasion-resistant coating, a thermoplastic polymer film and an organic / inorganic hybrid anti-reflection coating.

4. The method according to any of Claims 1 to 3, wherein the adhesion promoter is such that at least one, and preferably all, the following conditions are satisfied:
• the -SiXYZ head group is chosen from mono-, di- and tri-alcoxy silane groups, preferably tri-alcoxysilane groups, and the alcoxy group is chosen from methoxy and ethoxy groups,
• the spacer is a linear alkylene chain having from 1 to 10 carbon atoms or a branched alkylene chain having from 3 to 10 carbon atoms, wherein up to 3 carbon atoms may be substituted by an oxygen atom or a sulphur atom, preferably a linear alkylene chain having from 2 to 4 carbon atoms, and
• the reactive end group is chosen from the group consisting of amino, hydroxyl, thiohydroxy, acetamido, halogeno, halogenosilane, alcoxysilane, acetoxysilane, epoxy, thioepoxy, aldehyde, alkyne, carboxyl, ether, thioether, alkene, ketone and carboxylic acid ester groups, preferably amino and epoxy groups.

5. The method according to any of Claims 1 to 4, wherein the adhesion promoter has a molecular weight between 150 and 1000 g/mol and preferably between 165 and 450 g/mol.

6. The method according to any of Claims 1 to 5, wherein the bond coat composition is applied onto the outermost organic coating by vacuum evaporation or by spray deposition.

7. The method according to any of Claims 1 to 6, wherein the topcoat is selected from the group consisting of an anti-fouling coating, an anti-fog coating, an anti-reflection coating, or a mirror coating, preferably an anti-fouling coating or an anti-fog coating.

8. The method according to any of Claims 1 to 7, wherein the topcoat composition is applied by vacuum evaporation, spray coating, wipe coating or dip coating.

9. The method according to Claims 6 and 8, wherein both the bond coat composition and the topcoat composition are applied by vacuum evaporation or the bond coat composition is applied by spray coating and the topcoat composition is applied by either spray coating or wipe coating.

10. The method according to any of Claims 1 to 9, which includes step (b) and wherein the topcoat is an anti-fouling coating.

11. The method according to any of Claims 1 to 3, which does not include step (b) and wherein the topcoat is an anti-fog coating.

12. The method according to any of Claims 1 to 10, which further includes a step of activating the surface of the bond coat with vacuum air plasma before step (c).

13. The method according to any of Claims 1 to 12, wherein the optical article is part of glasses, preferably sunglasses, or a mask or goggle.

14. The method according to any of Claims 1 to 13, wherein the bond coat has a thickness ranging from 1 nm to 100 nm.

## Patentansprüche

1. Verfahren zum Versehen eines optischen Gegenstands mit einer Deckschicht, das Folgendes umfasst:
(a) Aktivieren der Oberfläche einer äußersten organischen Beschichtung des Gegenstands mit Vakuumluftplasma,
(b) gegebenenfalls Abscheiden einer Verbindungsschichtzusammensetzung, die mindestens einen Haftvermittler umfasst, der (i) eine -SiXYZ-Kopfgruppe, wobei X, Y und Z unabhängig aus einem Halogenatom oder einer -OR-Gruppe ausgewählt sind, wobei R jeweils unabhängig für ein lineares Alkyl mit 1 bis 6 Kohlenstoffatomen oder ein verzweigtes Alkyl mit 3 bis 6 Kohlenstoffatomen steht, (ii) eine reaktive Endgruppe, die, gegebenenfalls nach physikalischer oder chemischer Behandlung, mit mindestens einer Funktion mindestens einer in einer Deckschichtzusammensetzung enthaltenen Verbindung reagieren kann, und (iii) einen Spacer, der die Kopf- und Endgruppen miteinander verknüpft, umfasst, auf der aktivierten Oberfläche,
zum Erhalt einer Verbindungsschicht,
(c) Beschichten der aktivierten Oberfläche der äußersten organischen Beschichtung oder der Verbindungsschicht, sofern vorhanden, mit einer Deckschichtzusammensetzung zur Bildung einer Deckschicht,
wobei es sich bei dem optischen Gegenstand um eine ophthalmische Linse handelt.

2. Verfahren nach Anspruch 1, bei dem Luftplasma unter einem Druck von 10 bis 140 Pa, beispielsweise zwischen 10 und 50 Pa, weiter bevorzugt zwischen 20 und 40 Pa, angewendet wird.

3. Verfahren nach Anspruch 1 oder 2, bei dem die äußerste organische Beschichtung aus einem organischen Substrat, einer abriebfesten Beschichtung, einem Film aus thermoplastischem Polymer und einer organischen/anorganischen Hybrid-Antireflexionsbeschichtung ausgewählt ist.

4. Verfahren nach einem der Ansprüche 1 bis 3, bei dem der Haftvermittler so beschaffen ist, dass mindestens ein und vorzugsweise alle der folgenden Bedingungen erfüllt sind:
• die -SiXYZ-Kopfgruppe aus Mono-, Di- und Trialkoxysilangruppen, vorzugsweise Trialkoxysilangruppen, ausgewählt ist und die Alkoxygruppe aus Methoxy- und Ethoxygruppen ausgewählt ist,
• es sich bei dem Spacer um eine lineare Alkylenkette mit 1 bis 10 Kohlenstoffatomen oder eine verzweigte Alkylenkette mit 3 bis 10 Kohlenstoffatomen, wobei bis zu 3 Kohlenstoffatome durch ein Sauerstoffatom oder Schwefelatom substituiert sein können, vorzugsweise eine lineare Alkylenkette mit 2 bis 4 Kohlenstoffatomen, handelt und
• die reaktive Endgruppe aus der Gruppe bestehend aus Amino-, Hydroxyl-, Thiohydroxy-, Acetamido-, Halogen-, Halogensilan-, Alkoxysilan-, Acetoxysilan-, Epoxid-, Thioepoxid-, Aldehyd-, Alkin-, Carboxyl-, Ether-, Thioether-, Alken-, Keton- und Carbonsäureestergruppen, vorzugsweise Amino- und Epoxidgruppen, ausgewählt ist.

5. Verfahren nach einem der Ansprüche 1 bis 4, bei dem der Haftvermittler ein Molekulargewicht zwischen 150 und 1000 g/mol und vorzugsweise zwischen 165 und 450 g/mol aufweist.

6. Verfahren nach einem der Ansprüche 1 bis 5, bei dem die Verbindungsschichtzusammensetzung durch Vakuumverdampfung oder durch Aufsprühen auf die äußerste organische Beschichtung aufgebracht wird.

7. Verfahren nach einem der Ansprüche 1 bis 6, bei dem die Deckschicht aus der Gruppe bestehend aus einer Schmutzabweisungsbeschichtung, einer Antibeschlagbeschichtung, einer Antireflexionsbeschichtung oder einer Spiegelbeschichtung, vorzugsweise einer Schmutzabweisungsbeschichtung oder einer Antibeschlagbeschichtung, ausgewählt wird.

8. Verfahren nach einem der Ansprüche 1 bis 7, bei dem die Deckschichtzusammensetzung durch Vakuumverdampfung, Sprühbeschichten, Wischbeschichten oder Tauchbeschichten aufgebracht wird.

9. Verfahren nach den Ansprüchen 6 und 8, bei dem sowohl die Verbindungsschichtzusammensetzung als auch die Deckschichtzusammensetzung durch Vakuumverdampfung aufgebracht werden oder die Verbindungsschichtzusammensetzung durch Sprühbeschichten aufgebracht wird und die Deckschichtzusammensetzung entweder durch Sprühbeschichten oder durch Wischbeschichten aufgebracht wird.

10. Verfahren nach einem der Ansprüche 1 bis 9, das Schritt (b) enthält und bei dem es sich bei der Deckschicht um eine Schmutzabweisungsbeschichtung handelt.

11. Verfahren nach einem der Ansprüche 1 bis 3, das Schritt (b) nicht enthält und bei dem es sich bei der Deckschicht um eine Antibeschlagbeschichtung handelt.

12. Verfahren nach einem der Ansprüche 1 bis 10, das ferner einen Schritt der Aktivierung der Oberfläche der Verbindungsschicht mit Vakuumluftplasma vor Schritt (c) enthält.

13. Verfahren nach einem der Ansprüche 1 bis 12, bei dem der optische Gegenstand Teil einer Brille, vorzugsweise einer Sonnenbrille, einer Maske oder einer Schutz-, Sport- oder Schwimmbrille ist.

14. Verfahren nach einem der Ansprüche 1 bis 13, bei dem die Verbindungsschicht eine Dicke im Bereich von 1 nm bis 100 nm aufweist.

## Revendications

1. Procédé destiné à doter un article optique d'une couche de finition, comprenant les étapes suivantes :
(a) activer la surface d'un revêtement organique extérieur dudit article avec un plasma d'air sous vide,
(b) éventuellement, déposer sur ladite surface activée une composition de couche d'accrochage comprenant au moins un promoteur d'adhérence comprenant : (i) un groupe de tête -SiXYZ, dans lequel X, Y et Z sont indépendamment choisis entre un atome d'halogène ou un groupe -OR, chaque R étant indépendamment un alkyle linéaire ayant de 1 à 6 atomes de carbone ou un alkyle ramifié ayant de 3 à 6 atomes de carbone, (ii) un groupe de queue réactif qui est susceptible de réagir, éventuellement après traitement physique ou chimique, avec au moins une fonction portée par au moins un composé contenu dans une composition de couche de finition, et (iii) un groupe espaceur qui lie les groupes de tête et de queue,
de manière à obtenir une couche d'accrochage,
(c) recouvrir la surface activée du revêtement organique extérieur, ou la couche d'accrochage si elle est présente, avec une composition de couche de finition, de manière à former une couche de finition, l'article optique étant un verre ophtalmique.

2. Procédé de la revendication 1, dans lequel le plasma d'air est appliqué sous une pression de 10 à 140 Pa, par exemple entre 10 et 50 Pa, mieux encore entre 20 et 40 Pa.

3. Procédé selon la revendication 1 ou 2, dans lequel le revêtement organique extérieur est choisi parmi un substrat organique, un revêtement résistant à l'abrasion, un film polymère thermoplastique et un revêtement antireflet hybride organique/inorganique.

4. Procédé selon l'une quelconque des revendications 1 à 3, dans lequel le promoteur d'adhérence est tel qu'au moins une, et de préférence toutes les conditions suivantes sont satisfaites :
• le groupe de tête -SiXYZ est choisi parmi les groupes mono-, di- et tri-alcoxysilane, de préférence les groupes tri-alcoxysilane, et le groupe alcoxy est choisi parmi les groupes méthoxy et éthoxy,
• le groupe espaceur est une chaîne alkylène linéaire ayant de 1 à 10 atomes de carbone ou une chaîne alkylène ramifiée ayant de 3 à 10 atomes de carbone, dans laquelle jusqu'à 3 atomes de carbone peuvent être substitués par un atome d'oxygène ou un atome de soufre, de préférence une chaîne alkylène linéaire ayant de 2 à 4 atomes de carbone, et
• le groupe de queue réactif est choisi dans le groupe constitué par les groupes amino, hydroxyle, thiohydroxy, acétamido, halogéno, halogénosilane, alcoxysilane, acétoxysilane, époxy, thioépoxy, aldéhyde, alcyne, carboxyle, éther, thioéther, alcène, cétone et ester d'acide carboxylique, de préférence les groupes amino et époxy.

5. Procédé selon l'une quelconque des revendications 1 à 4, dans lequel le promoteur d'adhérence a un poids moléculaire entre 150 et 1000 g/mol et de préférence entre 165 et 450 g/mol.

6. Procédé selon l'une quelconque des revendications 1 à 5, dans lequel la composition de couche d'accrochage est appliquée sur le revêtement organique extérieur par évaporation sous vide ou par dépôt par pulvérisation.

7. Procédé selon l'une quelconque des revendications 1 à 6, dans lequel la couche de finition est choisie dans le groupe constitué par un revêtement antisalissure, un revêtement antibuée, un revêtement antireflet ou un revêtement miroir, de préférence un revêtement antisalissure ou un revêtement antibuée.

8. Procédé selon l'une quelconque des revendications 1 à 7, dans lequel la composition de couche de finition est appliquée par évaporation sous vide, revêtement par pulvérisation, revêtement par essuyage ou revêtement au trempé.

9. Procédé selon les revendications 6 et 8, dans lequel la composition de couche d'accrochage et la composition de couche de finition sont toutes deux appliquées par évaporation sous vide ou la composition de couche d'accrochage est appliquée par revêtement par pulvérisation et la composition de couche de finition est appliquée par revêtement par pulvérisation ou revêtement par essuyage.

10. Procédé selon l'une quelconque des revendications 1 à 9, qui comporte l'étape (b) et dans lequel la couche de finition est un revêtement antisalissure.

11. Procédé selon l'une quelconque des revendications 1 à 3, qui ne comporte pas l'étape (b) et dans lequel la couche de finition est un revêtement antibuée.

12. Procédé selon l'une quelconque des revendications 1 à 10, qui comporte en outre une étape d'activation de la surface de la couche d'accrochage avec un plasma d'air sous vide avant l'étape (c).

13. Procédé selon l'une quelconque des revendications 1 à 12, dans lequel l'article optique fait partie de verres de lunettes, de préférence de verres solaires, ou d'un masque ou de lunettes étanches.

14. Procédé selon l'une quelconque des revendications 1 à 13, dans lequel la couche d'accrochage a une épaisseur allant de 1 nm à 100 nm.
